# EUROPEAN PATENT APPLICATION

(11) **EP 4 098 704 A1**
(43) Date of publication of application: **07.12.2022**
(21) Application number: 21177838.6
(22) Date of filing: 04.06.2021
(51) Int. Cl.: C09D 5/18, C09D 7/61, C09D 7/65, C09D 7/40, C09D 183/00, C08K 5/3492, C08K 7/20, C08K 7/28, C08K 3/32

(54) **COATING**

(71) Applicant: Jotun A/S, 3202 Sandefjord (NO)
(72) Inventor: WADDELL, David, 3671 Dubai (AE); IRVING, James, Scunthorpe, DN15 8RR (GB)
(74) Representative: Gordon, Kirsteen Helen

(57) **Abstract**

The present invention provides a coating composition comprising:
(i) an epoxy-based binder;
(ii) a curing agent;
(iii) inorganic, spherical, filler particles;
(iv) organic, spherical, filler particles;
(v) an acid-generating agent; and
(vi) an expansion agent.

## Description

### INTRODUCTION

The present invention relates to a coating composition, which provides passive fire protection (PFP) as well as cold spill protection (CSP). The composition comprises an epoxy-based binder, a curing agent, inorganic, spherical, filler particles, organic, spherical filler particles, an acid-generating agent and an expansion agent. The invention also relates to a method of preparing the coating composition and to a kit for preparing the composition as well as to a container containing the composition. Additionally, the invention relates to a method of providing a coating on a surface (e.g. a metal surface) and to a coating on a surface formed from the composition of the invention. Further, the invention relates to use of the composition to form a coating, preferably an insulative and intumescent coating, on at least one surface of a substrate or article and to a coating system comprising an insulative and intumescent layer formed from the composition and optionally a top coat layer.

### BACKGROUND

Oil and gas providers are increasingly transitioning to a diversified range of energy sources, including liquefied gases such as liquefied natural gas (LNG) and hydrogen. The liquefied gases need to be stored at cryogenic temperatures (e.g. for LNG this is -162 °C) because this significantly reduces their volume and eases their transportation and storage.

However, cryogenic liquids at very low temperatures, such as -162 °C, represent two significant risks, namely fire and cryogenic spill. The vaporisation of the liquefied gases, and subsequent mixing with air, will produce an extremely explosive and flammable gas, and thus represents a significant fire risk. If the cryogenic liquid were to spill onto, e.g. structural steel, the steel would undergo an extreme thermal shock, causing embrittlement and potentially structural collapse.

To date, the solution to protecting structures, e.g. storage tanks, from risk of fire and cryogenic spill has been to include two separate coatings. Typically, an intumescent coating is used exclusively to provide passive fire protection. An intumescent coating is a coating that swells in the case of a fire to produce a carbon based insulating char. Such coatings are designed to slow the rate at which the structural steel increases in temperature, significantly delaying the time to any form of structural collapse giving time to, e.g. protect life and preserve expensive assets. Separately to the intumescent coating, an insulative coating is provided to provide protection against cryogenic spills.

However, the duplex coating system, i.e. the coating comprising an intumescent coating and an insulative coating in separate layers, has a number of drawbacks. First it is expensive and time consuming to apply, e.g. such coatings typically take several days to apply. Second, the final resulting coating tends to be very thick. This adds to the afore-mentioned cost, and also increases the risk of cracking and failure of the coating. Most materials, including metal structures, will expand as the temperature increases, and contract when the temperature decreases and if the underlying metal structure is expanding and contracting at a different rate than either or both of the intumescent and insulative coating, this may induce stress which can cause cracking and failure of the coating. Moreover, these effects are typically exaggerated the greater the thickness of the coating.

### SUMMARY OF INVENTION

Viewed from a first aspect the present invention provides a coating composition comprising:
(i) an epoxy-based binder;
(ii) a curing agent;
(iii) inorganic, spherical, filler particles;
(iv) organic, spherical, filler particles;
(v) an acid-generating agent; and
(vi) an expansion agent.

Viewed from a further aspect the present invention provides an intumescent coating composition comprising:
(i) an epoxy-based binder;
(ii) a curing agent;
(iii) inorganic, spherical, filler particles; and
(iv) organic, spherical, filler particles.

Viewed from a further aspect the present invention provides a method for preparing a composition as hereinbefore described comprising mixing:
(i) an epoxy-based binder;
(ii) a curing agent;
(iii) inorganic, spherical, filler particles;
(iv) organic, spherical, filler particles;
(v) an acid-generating agent; and
(vi) an expansion agent.

Viewed from a further aspect the present invention provides a kit for preparing a composition as hereinbefore described, comprising:
(i) a first container containing an epoxy-based binder; and
(ii) a second container containing a curing agent,
wherein each of said inorganic, spherical, filler particles, said organic, spherical, filler particles, said acid-generating agent and said expansion agent are present in at least one of said containers.

Viewed from a further aspect the present invention provides a container containing a composition as hereinbefore described.

Viewed from a further aspect the present invention provides a method of providing a coating on a surface, preferably a metal surface, wherein said method comprises:
(i) applying a composition as herein before described; and
(ii) curing said composition to form a coating on the surface.

Viewed from a further aspect the present invention provides a coating on a surface, preferably a metal surface, wherein said coating is formed from a composition as hereinbefore described. Preferred coatings are insulative and intumescent coatings.

Viewed from a further aspect the present invention provides the use of a composition as hereinbefore described to form a coating, preferably an insulative and intumescent coating, on at least one surface of a substrate or article.

Viewed from a further aspect the present invention provides a coating system comprising:
(i) optionally a primer layer;
(ii) an insulative and intumescent layer formed from a composition as hereinbefore described; and
(iii) optionally a top coat layer;
wherein at least one of said primer layer and said top coat layer is present.

### DEFINITIONS

As used herein the term "coating composition" refers to a composition that, when applied to a surface, forms a film or coating thereon.

As used herein the term "cold spill protection (CSP)" refers to the ability to withstand contact with cryogenic liquid, as determined by the simulated CSP test set out in the examples herein.

As used herein the term "passive fire protection (PFP)" refers to the ability to withstand contact with fire, as determined by the simulated PFP test set out in the examples herein. Intumescent coatings are a known type of PFP.

To "intumesce" means to char and expand. Hence, as used herein the term "intumescent coating," refers to a coating that swells upon contact with fire to produce a carbon based insulating char. When exposed to heat from a fire, for example, components in an intumescent coating chemically react to produce gases and a cellular carbonaceous char that expands into a foam when the gases become trapped within the char. Intumescent coatings thus form a relatively thick and thermally insulative foam barrier on the surfaces of coated substrates exposed to fire and/or relatively high heat..

As used herein the term "binder" refers to a polymer which forms a continuous film on a substrate surface when applied thereto. The other components of the composition are dispersed throughout the binder.

As used herein the term "epoxy-based" refers to a polymer or oligomer comprising epoxy groups and/or modified epoxy groups. The term epoxy-based binder encompasses binders that have the traditional epoxy backbone but where epoxy end-groups are modified with, e.g. acrylic or methacrylic functional groups that can be cured with the same curing agents as the epoxy groups. Often the epoxy resin will comprise at least some epoxy groups. The term epoxy is used interchangeably with epoxide.

As used herein the term "solid epoxy resin" refers to a polymer that is solid at 25 °C and 1 atm.

As used herein the term "liquid epoxy resin" refers to a polymer that is liquid at 25 °C and 1 atm.

As used herein the term "epoxy" refers to a three-atom cyclic ether.

As used herein the term "epoxy-based binder system" refers to the combination of epoxy resin(s) and curing agent(s), and optionally reactive diluents, silane, and accelerators. If present, hydrocarbon resin, co-binder, and flame retardant also regarded as part of the epoxy-based binder system.

As used herein the phrase "equivalent epoxy weight" or "EEW" refers to the number of epoxide equivalents in 1 kg of resin. It is measured by ASTM D-1652.

As used herein the terms "curing accelerator" and "accelerator" are used synonymously and refer to compounds which increase the rate of the curing reaction to cure or harden the coating.

As used herein the term "curing agent" refers to a compound which, when mixed with a binder, e.g. epoxy-based binder, produces a cured or hardened coating by generating cross-links within the polymer. Sometimes curing agents are referred to as hardeners.

As used herein the term "filler" refers to a compound which increases the volume or bulk of a coating composition. They are substantially insoluble in the coating composition and are dispersed therein. When filler particle sizes are referred to herein, it is the particle size when they are added to the composition.

As used herein the term "hollow", when used in relation to either organic or inorganic, spherical, filler particles refers to particles having a void, cavity or empty space in the centre which is occupied by gas, typically air.

As used herein the term "spherical", when used in relation to either organic or inorganic, filler particles, encompasses substantially spherical and spherical particles. Substantially spherical particles are identical in size in each of the x, y and z dimensions, ± 1.2 µm, more preferably ± 0.6 µm.

As used herein the term "average diameter" refers to the Z-average diameter size as determined by ISO 22412:2017 using a Malvern Mastersizer 2000 if the particle size is above 5 µm.

As used herein the term expansion agent is used interchangeably with the term blowing agent.

As used herein the term acid generating compound might also be called acid catalyst.

As used herein, the term (meth) acrylate encompasses both methacrylate and acrylate.

As used herein the term "weight % (wt%)", when used in relation to individual constituents of the composition, e.g. reactive diluent, etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "Volatile Organic Compounds" refers to compounds having a boiling point ≤ 250°C at 101.3 kPa. This is the definition given in EU Directive 2004/42/CE.

As used herein the term "solvent-free" refers to a composition comprising less than 10 g/L VOCs.

As used herein the term "molecular weight" refers to weight average molecular weight (Mw), unless otherwise specified. It is determined by Gel Permeation Chromatography.

As used herein the term "density" when used in relation to hollow, spherical, filler particles, refers to density as determined by gas pycnometer.

### DETAILED DESCRIPTION OF THE INVENTION

The present invention relates to a coating composition comprising:
(i) an epoxy-based binder;
(ii) a curing agent;
(iii) inorganic, spherical, filler particles;
(iv) organic, spherical, filler particles;
(v) an acid-generating agent; and
(vi) an expansion agent.

Preferably the coating composition of the invention is solvent-free. Particularly preferably the composition comprises 0-10 g/L VOCs, more preferably 0-5 g/L VOCs and still more preferably 0-2.5 g/L VOCs.

Optionally the coating composition of the present invention further comprises:
(vii) flame retardant; (viii) reinforcing fibers and/or scrim/mesh; (ix) carbon donor; and/or (x) additives.

The coating composition of the present invention provides coatings with passive fire protection (PFP) in combination with protection from cryogenic spills (i.e. CSP). This means that a single coating layer of the composition of the invention achieves dual functionality, namely PFP and CSP, and avoids the need for a duplex system consisting of separate PFP and CSP layers. In contrast to the duplex systems, known in the art, the coating composition of the present invention is simpler and cheaper to apply and may have a reduced dry film thickness. The reduced dry film thickness, in turn, means the coatings formed from the composition of the invention have a lower tendency to crack, in particular, in response to temperature induced movement differentials between the substrate and coating.

### Epoxy-based binder system

The epoxy-based binder system comprises the combination of one or more epoxy-based binders, one or more curing agents, and optionally silane, reactive diluent, accelerator, hydrocarbon resin, co-binder, and flame retardant.

### Epoxy-based binder

The epoxy-based binder system preferably comprises one or more epoxy-based binders selected from aromatic or aliphatic epoxy-based binders preferably comprising more than one epoxy group per molecule. The epoxy-groups may be in an internal or terminal position on the epoxy-based binder or on a cyclic structure incorporated into the epoxy-based binder. Preferably the epoxy-based binder comprises at least two epoxy group so that a crosslinked network can be formed.

It should be understood that the epoxy-based binders of the present invention also encompass binders that have the traditional epoxy backbones but where the epoxy end-groups have been modified with acrylic or methacrylic functional groups that can be cured with the same curing agents as the epoxy-groups.

Suitable aliphatic epoxy-based binders include epoxy and modified epoxy binders selected from cycloaliphatic epoxy such as hydrogenated bisphenol A, hydrogenated bisphenol A novolac and dicyclopentadiene based binders, glycidyl ethers such as polyglycidyl ethers of polyhydric alcohols, epoxy functional acrylic resins or any combinations thereof.

Suitable aromatic epoxy-based binders includes epoxy and modified epoxy binders selected from bisphenol type epoxy-based binders such as bisphenol A, bisphenol F and bisphenol S, resorcinol diglycidyl ether (RDGE), novolac type epoxy-based binders such as phenolic novolac type binders (bisphenol A novolac, bisphenol S novolac) and cresol novolac type binder or any combinations thereof.

In some preferred compositions the epoxy-based binder is an aromatic epoxy-based binder. Preferably, the aromatic epoxy-based binder is derived from a combination of a compound comprising a least one epoxide functionality with an aromatic co-reactant comprising at least two hydroxyl groups.

Preferred epoxy-based binders are bisphenol epoxy binders. Preferred epoxy-based binders are biphenol A and bisphenol F epoxy-based binders or bisphenol A/F epoxy binders.

The epoxy-based binder may be a modified epoxy-based binder. Preferably the epoxy-based binder is modified with fatty acids, polypropylene oxide and/or polyethylene oxide. The epoxy-based binder may also be modified with flexible components such as rubber (e.g. chloroprene and butadiene-acrylonitrile rubber), polysiloxane, polyester, polyamide, polyurethane and/or poly(meth)acryl.

The solids content in the epoxy-based binder is preferably more than 70 wt%, preferably more than 80 wt%, preferably more than 90 wt%, most preferred more than 99 wt%. In a further preferred coating composition, the epoxy-based binder is solvent free.

Examples of suitable commercially available epoxy-based binders are:
- Bisphenol A type epoxy-based binders: Epikote 828 from Hexion, Araldite GY 250 from Huntsman Advanced Materials,
- Bisphenol F epoxy based binders: Epikote 862 from Hexion, YDF- 170 from Kukdo, GY285 from Huntsman, DE 354 from Dow, BFE-170 from CCP, or KF8100 from Kolon.
- Mixture of bisphenol A and bisphenol F: DER 352 from Dow Chemicals, Epikote 235 from Hexion.

The epoxy-based binder may be either a liquid epoxy-based binder or a solid epoxy-based binder or a combination thereof. Preferably the epoxy-based binder is a liquid epoxy-based binder.

The liquid epoxy-based binder may have an epoxy equivalent weight (EEW) value of 140 to 1000. It is particularly preferred if the EEW is less than 500 such as 156 to 300, especially 156 to 250.

The viscosity of the liquid epoxy-based binder is preferably 1000 to 20 000 mPa, more preferred 1500 to 15 000 mPas.

The solid epoxy-based binder may have an equivalent epoxy weight (EEW) of 300 to 1000. It is most preferred however if the EEW of the solid epoxy-based binder is in the range of 350 to 750, such as 400 to 700, especially 500 to 670. The use of a solid bisphenol A type epoxy-based binder is most preferred.

If there are both liquid and solid epoxy-based binders present in the epoxy-based binder system, it is preferred if the liquid epoxy-based binder is in excess relative to the solid epoxy-based binder.

The epoxy-based binder is preferably present in 5 to 60 wt% of the coating composition, such as 5 to 40 wt% based on the total weight of the coating. More preferably the epoxy-based binder is present in an amount of 10 to 30 wt%, especially 12 to 28 wt% most especially 15 to 25 wt% based on the total weight of the coating. If a blend of epoxy-based binders is used these percentages refer to the total epoxy-based binder content, i.e. adding the wt% of each one.

In one preferred coating composition of the invention the epoxy-based binders include bisphenol A based binders, such as 4,4'-isopropylidenediphenol-epichlorohydrin resins, bisphenol F based binders and/or novolac based binders. Bisphenol A epoxy-based binders will be known to those in the field and have the general structure below.

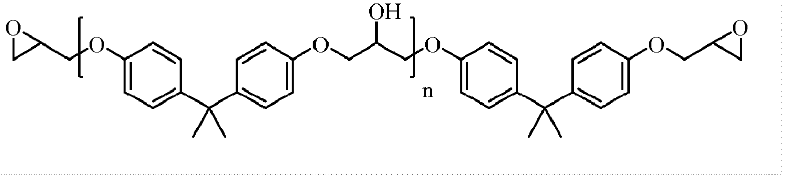

In one preferred coating composition of the invention the epoxy-based binder system comprises one or more bisphenol F epoxy-based binders.

The bisphenol F epoxy-based binder may have an EEW value of 100 to 350. However, it is particularly preferred if the EEW is 300 or less such as 100 to 300, especially 150 to 250. Preferably the bisphenol F epoxy-based binder is a liquid.

The Mw of the bisphenol F resin may be more than 170 g/mol. A preferred bipshenol F (4',4'-methylenebisphenol) epoxy-based binder derives from the combination of bisphenol F and epichlorohydrin. The use of a difunctional epoxy-based bisphenol F binders is especially preferred.

A combination of two or more bisphenol F binders might be used. The viscosity of the bisphenol F binders are preferably 1000 to 10 000 mPas, more preferred 2000 to 5000 mPas.

### Curing agent

The epoxy-based binder system also comprises at least one curing agent. The curing agent can be any curing agent commonly known as a curing agent for epoxy-based binder systems. Ideally it is amine based.

To obtain a crosslinked network the curing agent must contain at least two "reactive" hydrogen atoms. "Reactive" hydrogen atom refers to the hydrogen atom that is transferred from the nucleophile to the oxygen atom of the epoxide during the ring opening reaction. The curing agent typically contains at least two curing reactive functional groups.

Examples of suitable curing agents are thiol curing agents, polythiol curing agents, amine curing agents, polyamine curing agents, amine functional polyamide and/or aminofunctional polymer curing agents. The curing agent may also alternatively comprise at least one aminofunctional polysiloxane.

Examples of suitable polythiol curing agents are pentaerythriol tetramercapto propionate. Example of a suitable commercially available polythiol curing agent is GABEPRO^{®} GPM800 from Gabriel performance materials.

In one preferred coating composition the epoxy-based binder system comprises at least one amine functional curing agent. The curing agent typically contains at least two amine groups. The amine groups may be primary or secondary.

Suitable curing agents comprising amines or amino functional polymers are selected from aliphatic amines and polyamines (e.g. cyclo-aliphatic amines and polyamines), amine functional polyamides, polyether amines, polyimidazoles, polyoxy alkylene amines (e.g. polyoxy alkylene diamines), alkylene amines (e.g. alkylene diamines), aralkyl amines, aromatic amines, Mannich bases (e.g. those sold commercially as "phenalkamines"), polyamines comprising benzylamine structures, amino functional silicones or silanes, and including epoxy adducts and derivatives thereof.

In one preferred coating composition the amine functional curing agent comprises a cyclic structure which includes alicyclic amines and modified products of alicyclic amines, preferably polyamines. The term cyclic includes alicyclic, aromatic and heterocyclic polyamines.

In one preferred coating composition the amine functional curing agent is a polyamine curing agent comprising one or more benzylamine structures. It is to be understood that polyamine is defined as a compound comprising at least two repeating amine units. Preferably, the polyamine comprises more than three amine groups.

In one preferred coating composition the benzylamine group comprises only one amine group.

In one preferred coating composition the amine functional curing agent may comprise a benzylated polyalkylene polyamine structure as described in WO2017147138 A1. The benzylated polyalkylene polyamine structure may be further reacted with for example Mannich bases or epoxy-functional compounds to make epoxy-adducts.

In one coating composition adducts of the amine curing agent might also be used. Such adducts can be prepared by reaction of the amine with suitably reactive compounds such as epoxy-binders, epoxy-functional reactive diluent, acrylates, maleates, fumarates, methacrylates or electrophilic vinyl compounds such as acrylonitrile.

Examples of suitable commercially available amine functional curing agents are:
Ancamine 2609, Ancamine 2695, Ancamine 2738, Ancamide 260A, Ancamide 500, Ancamide 506, Ancamide 2386, Ancamine 2759, Ancamine 2760, Ancamine 2712M, Ancamine 1618, Ancamine 2165, Ancamine 2280, Ancamine 2432, Ancamine 2519, Ancamine 2802, Ancamine 2609w, Ancamine 2806, Ancamine 2049, Ancamine 2143 from Evonik, Epikure 3140 from Hexion, GX-483 from Kukdo Chemical, AP5050 from Admark Polycoats, MXDA and Gaskamine 240 from Mitsubishi Gas Chemical Company Inc., Aradur 42 BD and Aradur 943 CH from Huntsman Advanced Materials.

In one particularly preferred coating composition, the curing agent is an aliphatic and/or cycloaliphatic polyamine such as the Ancamine curing agents from Evonik.

In another preferred coating composition the curing agent is an amine functional polyamide curing agent. In a further preferred coating composition the amine functional polyamide curing agent comprises one or more benzylamine structures.

It will be appreciated that the curing agent can be supplied neat or in a solvent, ideally the curing agent is solvent free.

One or more curing agents might be used in combination. In one preferred option two or more curing agents are used in combination.

The curing agent should cure the epoxy-based binder at temperatures ranging from 0 to 50 °C. It is preferred if the epoxy-based binder system cures at ambient temperatures.

It is common to quote the equivalent weight of the curing agent in terms of the "active hydrogen equivalent weight". The number of "active hydrogen equivalents" in relation to the one or more curing agents is the sum of the contribution from each of the one or more curing agents. The contribution from each of the one or more curing agents to the active hydrogen equivalents is defined as grams of the curing agent divided by the active hydrogen equivalent weight of the curing agent, where the active hydrogen equivalent weight of the curing agent is determined as: grams of the curing agent equivalent to 1 mol of active hydrogen. For adducts with epoxy resins the contribution of the reactants before adduction is used for the determination of the number of "active hydrogen equivalents" in the complete epoxy-based binder system.

It is also common to quote the number of "epoxy equivalents" in the epoxy-based binders. The "epoxy equivalents" is the sum of the contribution from each of the one or more epoxy-based binders and any other component that contains an epoxy such as a silane or a reactive diluent. The contribution from each of the one or more epoxy-based binders to the epoxy equivalents is defined as grams of the epoxy-based binder divided by the epoxy equivalent weight of the epoxy-based binder, where the epoxy equivalent weight of the epoxy-based binder is determined as: grams of the epoxy resin equivalent to 1 mol of epoxy groups. For adducts with epoxy-based binder the contribution of the reactants before adduction is used for the determination of the number of "epoxy equivalents" in the epoxy-based binder system.

Preferably the ratio between the hydrogen equivalents of the totality of the curing agents and the totality of epoxy equivalents in the epoxy-based binder system of the present invention is in the range of 50: 100 to 120: 100.

Especially preferred epoxy-based binder systems have a ratio between the hydrogen equivalents of the curing agent and the epoxy equivalents of the epoxy resin in the range of 60: 100 to 120: 100 such as 80: 100 to 120: 100, e.g. 90: 100 to 110: 100.

It will be appreciated that the curing agent is shipped separately to the epoxy-based binder and is only mixed with the epoxy-based binder shortly before application. The mixing ratio of the compositions comprising the epoxy-based binder and the curing agent is, of course, governed by the relative amounts of epoxy and active hydrogens present. Ideally, the mixing ratio in solids volume is 1:1 to 10:1, first to second composition, preferably 1:1 to 5:1, most preferred 1:1.The curing agent composition and the epoxy-based binder composition are mixed shortly before application to the substrate.

In a preferred coating composition, the curing agent may be present in an amount of 5 to 30 wt%, such as 10 to 25 wt%, based on the total weight of the composition.

Whilst a curing accelerator may be used, in one preferred coating composition, the curing agent is employed without the use of a separate accelerator to accelerate the crosslinking process. Some known curing agents are however, combined with an accelerator such as a tertiary amine catalyst and that is also within the scope of the invention.

### Accelerator

The epoxy-based binder system optionally comprises a curing accelerator. The curing accelerator may be any known curing accelerator for epoxy-based coating systems such as tertiary amines, (meth)acrylic esters, imidazoles, organic acids, phenols and organic phosphines.

Examples of suitable tertiary amines are triethanol amine, dialkylamino ethanol, triethylene diamine, 1,4-diazabicyclo[2.2.2]octane, 1,8-diaza-bicyclo[5.4.0]undec-7-ene and 2,4,6-tris(dimethylaminomethyl)phenol. One particularly preferred accelerator is 2,4,6-tris(dimethylaminomethyl)phenol such as Ancamine K54 from Evonik.

Examples of suitable imidazoles are 2-methylimidazole, 2-phenylimidazole, 2-phenyl-4-methyl imidazole and 2-heptadecylimidazole.

Examples of suitable organic acids are benzoic acid derivatives such as salicylic acid.

Examples of suitable organic phosphines are tributyl phosphine, methyldiphenyl phosphine, triphenyl phosphine, diphenyl phosphine and phenyl phospine.

Examples of suitable phenols are alkyl phenols such as nonylphenol.

Examples of suitable (meth) acrylic esters are the same as described for the (meth) acrylate-functional reactive diluents below.

The accelerator is preferably present in an amount of 0.1 to 10 wt% preferably 0.5 to 5 wt%, more preferred 1 to 3 wt%, based on the total weight of the coating composition.

### Reactive diluent

The epoxy-based binder system optionally comprises a reactive diluent. The reactive diluent preferably comprises epoxy and/or (meth) acrylic functional groups. When present, the reactive diluent forms part of the binder system and reacts with other components of the binder system during the curing process.

In one preferred coating composition reactive diluent is an epoxy-functional reactive diluent. The epoxy-functional reactive diluent may be either monofunctional or difunctional.

Examples of such reactive diluents include phenyl glycidyl ether, alkyl glycidyl ether (number of carbon atoms in alkyl group: 1 to 16), glycidyl ester of neodecanoic acid (R¹ R² R³C-COO-Gly, where R¹ R² R³ are alkyl groups such as C8 to C10 alkyl and Gly is a glycidyl group), olefin epoxide (CH₃-(CH₂)n-Gly, wherein n=11 to 13, Gly: glycidyl group), 1,4-butanediol diglycidyl ether (Gly-O-(CH₂)₄-O-Gly), 1,6-hexanediol diglycidyl ether (Gly-O-(CH₂)₆-O-Gly), neopentyl glycol diglycidyl ether (Gly-O-CH₂-C(CH₃)₂-CH₂-O-Gly), trimethylolpropane triglycidyl ether (CH₃-CH₂-C(CH₂-O-Gly)₃), and C1-20-alkylphenyl glycidyl ether (preferably C1-5 alkylphenylglycidyl ether), e.g. methylphenyl glycidyl ether, ethylphenyl glycidyl ether, propylphenyl glycidyl ether and para tertiary butyl phenyl glycidyl ether (*p*-TBPGE), reaction products of epichlorohydrin and an oil obtained from the shells of cashew nuts.

In one preferred coating composition the epoxy-functional reactive diluent is reaction products of epichlorohydrin and an oil obtained from the shells of cashew nuts, like for example Cardolite NC-513 from Cardolite.

In another particularly preferred coating composition, the epoxy-functional reactive diluents are aliphatic epoxy-functional reactive diluents. The aliphatic epoxy-functional reactive diluents are preferably formed from the reaction of a compound comprising at least one aliphatic epoxide functionality with an aliphatic alcohol or polyol such as 1,6-hexanediol diglycidyl ether or 1,4-butanediol diglycidyl ether. Aliphatic glycidyl ethers of chain length 8 to 14 are also preferred. Aliphatic epoxy-functional reactive diluents may contribute to the flexibility of the coating film.

The epoxy equivalent weight (EEW) of the epoxy-functional reactive diluent is preferably 50 to 500, more preferred 100 to 400, most preferred 100 to 300.

The epoxy-functional reactive diluent is different from the epoxy binder. It is preferred if the reactive diluent is of low molecular weight such as less than 500 g/mol. Preferably the viscosity of the epoxy-functional reactive diluent is <100 cp, preferably <50 cP, preferably <35 cp. It is therefore a liquid at 23°C and atmospheric pressure.

In another preferred coating composition the reactive diluent comprises (meth) acrylic functional groups.

The (meth)acrylic functional reactive diluent is preferably an aliphatic (meth)acrylate comprising at least two (meth)acrylate functional groups linked by an organic linker. Such a multiester may be a diester, a triester or a tetraester.

The molecular weight of the (meth)acrylate functional reactive diluent is preferably less than 1000, such as less than 750, especially less than 500 g/mol. Ideally, the (meth)acrylic functional reactive diluent will be the (meth)acrylate ester of a polyol such as a diol, or triol or a sugar based polyol such as a sugar alcohol. It is not essential for all OH groups within a polyol to carry the (meth)acrylate ester group, however there should preferably be at least two ester functionalities in the (meth)acrylic ester. Suitable polyols for functionalization include alkylene diols (e.g. hexanediol, pentanediol), saccharides (e.g. mono or disaccharides) or polyols (especially sugar alcohols) such as erythritol, sorbitol, maltitol and mannitol.

(Meth)acrylic functional reactive diluents of particular interest are of formula 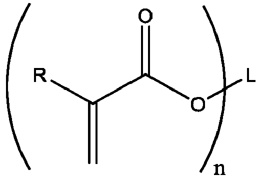 wherein R is H or Me;
n is 2-5; and
L represents the residue of a polyol such as the residue of hexandiol or the residue of a saccharide or sugar alcohol. Thus, at least two OH groups of the polyol carry the acrylate ester shown in the formula above.

L preferably contains only C, H and O atoms. The molecular weight of L is preferably low, such as 1000 g/mol or less.

It is common to quote the number of "acrylate equivalents" in the (meth)acrylic functional reactive diluent. The "acrylate equivalents" is the sum of the contribution from each of the one or more (meth)acrylic functional reactive diluents. The contribution from each of the one or more (meth)acrylic functional reactive diluents to the acrylate equivalents is defined as grams of the (meth)acrylic functional reactive diluent divided by the acrylate equivalent weight of the (meth)acrylic functional reactive diluent, where the acrylate equivalent weight of the (meth)acrylic functional reactive diluent is determined as: grams of the (meth)acrylic functional reactive diluent equivalent to 1 mol of acrylate group. For adducts with curing agents the contribution of the reactants before adduction is used for the determination of the number of "acrylate equivalents" in the complete (meth)acrylic functional reactive diluent system. It is common to include "acrylate equivalents" into the total "epoxy equivalents" when formulating.

A particularly preferred (meth) acrylic reactive diluent is trimethylol propane triacrylate.

The viscosity of the (meth) acrylic functional reactive diluent is preferably less than 300 mPas, more preferably less than 200 mPas, most preferred less than 150 mPas.

A preferred (meth)acrylic functional reactive diluent have an acrylate equivalent weight (AEW) value of 50 - 200, more preferred 70 - 150, most preferred 80 - 125.

Mixtures of (meth)acrylic functional reactive diluents may also be used.

The above reactive diluents can be used singly or in combination of two or more diluents.

The reactive diluent is preferably present in an amount of 0.25 to 15 wt% preferably 0.5 to 10 wt%, more preferred 1 to 7 wt%, based on the total weight of the coating composition. If a blend of reactive diluents is used these percentages refer to the total content of reactive diluents, i.e. adding the wt% of each one.

It will be appreciated that as the reactive diluent might react with the curing agent, that it should be kept separate from the curing agent in the kit used to form the coating composition.

### Silane

The coating composition of the invention optionally comprises at least one silane. When present, the silane is part of the binder system and reacts with other components of the binder system during curing.

Preferably the silane is a functional silane comprising functional groups that can react with the binder system such as amine, epoxy, acryl, methacryl, thiol and isocyanate groups. Silanes of use in the invention are generally of low Mw such as less than 400 g/mol. Suitable silanes are of general formula (I) or (II):

(I) Y-R_{(4-z)}SiX_{z}

wherein z is an integer from 1 to 3,

(II) Y-R_{(3-y)}R¹SiX_{y}

wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents a halogen group or an alkoxy group; and
Y is a functional group bound to R that can react with the epoxy-based binder and/or the curing agent.

Preferably Y is a isocyanate, epoxy, amino, hydroxy, carboxy, thiol, acrylate, or methacrylate group, more preferred epoxy, amino, acrylate or methacrylate groups, most preferred epoxy or amino group. It is particularly preferred if Y is an epoxy group. The Y group can bind to any part of the chain R. It will be appreciated that where Y represents an epoxy group then R will possess at least two carbon atoms to allow formation of the epoxide ring system.

In one particularly preferred silane Y is an amino group or epoxy group. The amino groups are preferably NH₂. Preferably Y is an epoxy group.

If the Y group is an amino group that can react with the epoxy-based binder, it is preferred if the silane is provided separately from the epoxy-based binder together with the curing agent. In general, in the kit of the invention, the silane should not react with any ingredient of the component of the kit in which the silane is present.

Each X independently represents a halogen group or an alkoxy group. It is especially preferred if X is an alkoxy group such as a C1-6 alkoxy group, especially methoxy or ethoxy group. It is also especially preferred if there are two or three alkoxy groups present. Thus z is ideally 2 or 3, especially 3.

Subscript y is preferably 2.

R¹ is preferably C1-4 alkyl such as methyl.

R is a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-Epoxypropoxy)propyl] trimethoxysilane:

H₂COCHCH₂OCH₂CH₂CH₂Si(OCH₃)₃.

R is preferably an unsubstituted (other than Y obviously), unbranched alkyl chain having 2 to 8 C atoms.

A preferred silane general formula is therefore of structure (III)

(III) Y'-R'_{(4-z')}SiX'_{z}

wherein z' is an integer from 2 to 3,
R' is a unsubstituted, unbranched alkyl chain having 2 to 8 C atoms optionally containing an ether or amino linker,
Y' is an amino or epoxy functional group bound to the R' group, and
X' represents an alkoxy group.

Examples of such silanes are the many representatives of the products manufactured by Degussa in Rheinfelden and marketed under the brand name of Dynasylan(R)D, the Silquest(R) silanes manufactured by Momentive, and the GENOSIL(R) silanes manufactured by Wacker.

Specific examples include methacryloxypropyltrimethoxysilane (Dynasylan MEMO, Silquest A- 174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), tris(3-trimethoxysilylpropyl) isocyanurate (Silquest Y- 11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-l 120) or N-(2-aminoethyl)-3-aminopropyltriethoxysilane, triamino- functional trimethoxysilane (Silquest A- 1130), bis(gamma- trimethoxysilylpropyl)amine (Silquest A-l 170), N-ethyl-gamma- aminoisobytyltrimethoxy silane (Silquest A-Link 15), N-phenyl-gamma-aminopropyltrimethoxysilane (Silquest Y-9669), 4-amino-3,3-dimethylbutyltrimethoxysilane (Silquest Y-I 1637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other specific silanes of interest include 3 -Aminopropyltriethoxysilane, 3 - Aminopropyltrimethoxysilane, N-(Aminoethyl)-aminopropyltrimethoxysilane H₂NCH₂CH₂NHCH₂CH₂CH ₂Si(OCH₃)₃, 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂ CH₂CH₂Si(OCH₂CH₃)₃, [3-(2,3-Epoxypropoxy)propyl]trimethoxysilane (H₂COCHCH₂OCH₂CH₂CH₂ Si(OCH₃)₃).

The use of silane 3-glycidoxypropyltrimethoxysilane is especially preferred. A mixture of silanes might also be used.

The amount of silane present in the coating composition may be 0.1 to 15 wt%, preferably 0.25 to 10 wt%, more preferred 0.5 to 7 wt%, based on the total weight of the coating composition. If a blend of silanes is used these percentages refer to the total silane content, i.e. adding the wt% of each one.

It will be appreciated that if the silane comprises functional groups that can react with the epoxy-based binder it should be kept separate from the epoxy-based binder in the kit used to form the coating composition.

### Hydrocarbon resin

The coating composition of the invention may also comprise a hydrocarbon resin. The term hydrocarbon resin is a term of the art and refers to a group of typically petroleum derived hydrophobic resins although some resins may also be sourced naturally. Preferred hydrocarbon resins of the invention contain C and H atoms only but some may also contain O atoms, e.g. where the -O- content may be 0 to 10.0 wt% such as 0 to 5.0 wt% of the hydrocarbon resin.

Preferably the hydrocarbon resins have a low water solubility such as less than 5 g/L, more preferred 2 g/L, most preferred 1 g/L.

In general, all types of hydrocarbon resin such as solid or liquid pure aromatic and/or aliphatic C5 and C9 hydrocarbon resins, mixtures of C5/C9, aliphatic/aromatic feedstocks and modified type hydrocarbon resins with epoxy or hydroxyl can be utilized. The C5 resins are generally oligomers or polymers formed from aliphatic monomers with five carbons. The C9 resins are generally oligomers or polymers of nine-carbon aromatic monomers. Preferably, the hydrocarbon resin has a molecular weight less than 1000 g/mol and most preferably molecular weight less than 500 g/mol.

Ideally, the hydrocarbon resin is a petroleum resin. The petroleum resin is a polymer that may contain a hydroxyl group, which is formed using, as a main raw material, a fraction produced as a by-product in the petroleum refining, from petrochemical and carbon feedstocks.

Examples of the petroleum resins suitable in the present invention include an aromatic petroleum resin obtained by polymerizing a C9 fraction (e.g. styrene derivatives such as alpha methylstyrene, o, m, p-cresol, indene, methyl indene, cumene, napthalene or vinyltoluene) obtained from a heavy oil that is produced as a by-product by naphtha cracking, an aliphatic petroleum resin obtained by polymerizing a C5 fraction such as 1,3-pentadiene or isoprene, 2-methyl-2-butene, cyclopentadiene, dicyclopentadiene or cyclopentene. Also employable in the invention are a copolymer-based petroleum resin obtained by copolymerizing the C9 fraction and the C5 fraction, an aliphatic petroleum resin wherein a part of a conjugated diene of the C5 fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene.

Mixtures of diaryl and triaryl compounds obtained from reaction of C9 blends under catalytic conditions are also possible to utilize. Into these petroleum resins, hydroxyl groups are introduced.

Of the above petroleum resins, a hydroxyl group-containing aromatic petroleum resin is particularly preferable from the viewpoints of water resistance and seawater resistance. Thus a phenolic hydrocarbon resin is preferred.

Another possibly hydrocarbon resin is a xylene resin synthesized from 1,3-dimethylbenzene and formaldehyde. Also employable are xylene resins modified with phenols such as bifunctional phenol (e.g., phenol, para-t- butylphenol, p-Cumylphenol, o,p-Dicumylphenol).

Another option is a coumarone resin which is a copolymer containing a coumarne constituent unit, an indene constituent unit and/or a styrene constituent unit in its main chain.

The indene-coumarone resin may be modified with phenol at the end, and at least a part of aromatic rings in the coumarone resin may be hydrogenated. Such coumarone resins include a liquid product having a number-average molecular weight Mn of 200 to 300 and a solid product having a number-average molecular weight Mn of 600 to 800, and any one of them may be used singly, or both of them may be used in combination.

In one preferred coating composition, the hydrocarbon resin is a xylene formaldehyde resin such as EPODIL LV5 from Evonik.

Preferably the hydrocarbon resin is a liquid hydrocarbon resin.

The hydrocarbon resin is preferably non-reactive, i.e. it does not react with other components of the coating composition. It is therefore preferred if the hydrocarbon resin is free of any epoxy groups. These resins can help decrease the viscosity of the binder system resin and reduce surface tension for improved surface wetting. They also add hydrophobic character to the composition which often results in improved water tolerance. They may also improve the flexibility of the coating film. The skilled person is familiar with the concept of hydrocarbon resins.

Most preferred is a hydrocarbon resin with an "O atom" content of 0 to 8.0 wt% such as 0 to 5.0 wt% or a xylene formaldehyde with a OH content <3 wt%.

It is also possible to utilize hydrocarbon resins based on hydrogenation of natural resins such as rosins, e.g. gum rosin, wood rosin and tall oil rosins. Hydrocarbon resins based on esterification of rosin esters can also be employed.

Hydrocarbon resins based on cardanol can also be employed.

Preferably the hydrocarbon resin forms 0.1 to 20 wt% of the coating, preferably 0.5 to 10 wt%, especially 0.5 to 8 wt%, most especially 0.75 to 5 wt%, based on the total weight of the coating composition.

### Co-binder

Optionally a co-binder may be present in the coating composition of the invention in addition to the epoxy-based binder. Examples of suitable co-binders are saturated polyester resins, polyvinylacetate, polyvinylbutyrate, copolymers of vinyl acetate, vinyl isobutyl ether, copolymers of vinyl chloride and vinyl isobutyl ether, styrene co-polymers such as styrene/butadiene co-polymers, acrylic resins, polysiloxane, hydroxy-acrylate copolymers, fatty acids and cyclized rubbers.

The amount of co-binder present in the coating composition may be 0.1 to 20 wt%, preferably 0.5 to 15 wt%, based on the total weight of the coating composition.

### Flame retardant

The binder system may also comprise at least one flame retardant such as a phosphorus containing flame retardant. Suitable flame retardants include phosphoric acid, phosphite, phosphonate and phosphoric acid esters.

The use of triarylphosphate esters, especially triphenyl phosphate esters are preferred. Where a flame retardant is used this must be different and hence separate from the intumescent components, which are described below.

Preferably the flame retardant forms from 0.5 to 15 wt% of the coating composition, preferably 1.0 to 10% by weight, e.g. 2.5 to 8.0 wt%, especially 3.0 to 8.0 wt%, based on the total weight of the coating composition.

### Inorganic, spherical filler particles

The coating composition of the present invention comprises inorganic, spherical, filler particles. Preferred inorganic, spherical, filler particles are hollow. Suitable hollow, inorganic, spherical, filler particles are commercially available. Examples of commercially available hollow, inorganic, spherical filler particles include FilliteCenosphere, Poraver (expanded glass), Thermospheres, Omega spheres (availale from e.g. 3M, Trelleborg, Potters, SMC minerals) and Hollolite.

The inorganic, spherical particles, preferably hollow, inorganic, spherical particles are a critical component of the coating composition. These particles contribute to the thermal insulation provided by the coatings prepared with the coating composition as well as to the coating crack resistance. Crack resistance is advantageous because the coatings prepared from the composition of the invention are sometimes exposed to high temperature differentials between the substrate surface and the coating surface.

The inorganic, spherical, filler particles are preferably hollow. This means the particles have a void or cavity in their centres. This void or empty space is filled with gas, preferably air. This contributes to the insulative property of the coating. Preferred inorganic, spherical, filler particles for use in the present invention are substantially hollow. Thus preferably the volume of the void or cavity is at least 70 %vol and more preferably at least 80 %vol of the total volume of the particles. Preferably the hollow, inorganic, spherical, filler particles have as low a density as practicable, e.g. the density of the hollow, inorganic, spherical, filler particles might be 0.1-1 gcm⁻³, more preferably 0.2-0.8 gcm⁻³, and still more preferably 0.25-0.5 gcm⁻³, e.g. as specified on the technical specification provided by suppliers. This reflects the fact that the particles are hollow rather than solid. Lower density particles are advantageous because they have thinner walls which, in turn, improves thermal insulation.

Preferably the inorganic, spherical, filler particles present in the coating compositions of the present invention have a crush strength of at least 3000 psi, e.g. as determined by the Nitrogen Isostatic Crush Strength test. This is beneficial as it means that the filler particles are not crushed during processing and thus maintain their ability to provide insulation in the final coatings. It is also advantageous that the filler particles do not change shape and/or size during processing, so they can pack tightly and achieve a high build in the final coatings formed.

The inorganic, spherical, filler particles present in the coating compositions of the present invention comprise, and more preferably consist, of glass, ceramic or metal oxide. More preferably the inorganic, spherical, filler particles present in the coating compositions of the present invention comprise, and still more preferably consist, of glass. This is because glass particles provide a good balance of crush strength, hardness and conductivity.

Optionally the inorganic, spherical, filler particles present in the coating compositions of the present invention may be surface treated. Some examples of surface treatment include treatment to alter the hydrophobicity of the surface, to improve compatibility with the binder and/or to facilitate chemical incorporation into the binder. In one preferred option the inorganic, spherical, filler particles are not surface treated.

The inorganic, filler particles present in the coating compositions of the invention are substantially spherical and more preferably spherical. This is advantageous as it allows the filler particles to pack more closely together in the coating compositions of the invention. Preferably the inorganic, filler particles have a Z-average diameter of 1 to 100 µm, more preferably 1 to 80 µm and still more preferably 10-50 µm, as determined by ISO 22412:2017 using a Malvern Mastersizer 2000. These particle sizes are preferred to ensure that the coating has adequate insulative properties and achieve a high packing efficiency in the coating.

Preferred coating compositions of the present invention comprise 20-60 vol%, more preferably 25-55 vol% and still more preferably 30-50 vol% inorganic, spherical, filler particles, based on the total volume of the composition.

Preferred coating compositions of the present invention comprise 1-40 wt%, more preferably 5-35 wt% and still more preferably 10-30 wt% inorganic, spherical, filler particles, based on the total weight of the composition.

### Organic, spherical filler particles

The coating composition of the present invention comprises organic, spherical, filler particles.

The organic spherical filler particles may be hollow or non-hollow. Preferred organic, spherical filler particles are hollow.

The organic, spherical, filler particles present in the coating compositions of the present invention may be prepared by conventional polymerisation processes, such as emulsion polymerisation, seeded growth polymerisation and suspension polymerisation. The polymerisation may be a single stage process or a multi-step process. Alternatively, suitable organic, spherical, filler particles are commercially available. Examples of commercially available hollow, organic, spherical filler particles include Dualite (from Chase), Sunspheres (from Dow) and Expancel (from Nouryon).

The organic, spherical particles are a critical component of the coating composition. These particles contribute to the thermal insulation provided by the coatings prepared with the coating composition as well as to the coating crack resistance.

The organic, spherical, filler particles are preferably hollow. This means the particles have a void or cavity in their centres. This void or empty space is filled with gas, preferably air, C₁₋₈ alkanes, or a mixture thereof. This contributes to the insulative property of the coating. Preferred organic, spherical, filler particles for use in the present invention are substantially hollow. Thus preferably the volume of the void or cavity is at least 70 %vol and more preferably at least 80 %vol of the total volume of the particles. Preferably the organic, spherical, filler particles have a density as low as practicable, e.g. the organic, spherical, filler particles have a density of 0.005-0.9 gcm⁻³, more preferably 0.01-0.5 gcm⁻³, still more preferably 0.015-0.2 gcm⁻³, yet more preferably 0.015 - 0.09 gcm⁻³ e.g. as specified on the technical specification provided by suppliers. This reflects the fact that the particles are hollow rather than solid.

The organic, filler particles present in the coating compositions of the invention are preferably expandable. Expandable organic, filler particles are known in the art. It is believed that the presence of expandable, organic, filler particles improves the insulative properties of the resulting coatings.

The organic, spherical, filler particles present in the coating compositions of the present invention comprise, and more preferably consist of, poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), vinylidene, polyacetate, poly(ester), polybutadiene or copolymers thereof. Organic, spherical, filler particles comprising these polymers have been found to yield coatings with high thermal insulation and good crack resistance, even across temperature differentials.

The organic, spherical, filler particles present in the coating compositions of the present invention may be surface coated. For example, the organic, spherical, filler particles may be surface coated with inorganic mineral powers such as talc, calcined kaolin, limestone, calcium carbonate, wollastonite and fumed silica.

Preferably, however, the organic, spherical filler particles are not surface coated.

The organic, filler particles present in the coating compositions of the invention are substantially spherical and more preferably spherical. This is advantageous as it allows the filler particles to pack more closely together in the coating compositions of the invention. Preferably the organic, filler particles have a Z-average diameter of 10 to 150 µm, more preferably 10 to 120 µm and still more preferably 15-120 µm, as determined by ISO 22412:2017 using a Malvern Mastersizer 2000. These particle sizes are preferred to ensure that the coating has adequate insulative properties and achieve a high packing efficiency in the coating.

Preferred coating compositions of the present invention comprise 5-20 vol%, more preferably 10-20 vol% and still more preferably 10-15 vol% organic, spherical, filler particles, based on the total volume of the composition.

Preferred coating compositions of the present invention comprise 0.05-5 wt%, more preferably 0.1-4.0 wt% and still more preferably 0.1-2 wt% organic, spherical, filler particles, based on the total weight of the composition.

In preferred coating compositions of the present invention, the average diameter of the hollow, organic, spherical filler particles is greater than the average diameter of the hollow, inorganic, spherical filler particles. Preferably the average diameter of the hollow, organic, spherical, filler particles is 1-5 times greater, and more preferably 2-4 times greater than the average diameter of the hollow, inorganic, spherical filler particles. With this combination of hollow, filler particles it has been found that coatings with a high level of thermal insulation can be provided.

In preferred coating compositions of the present invention, the volume ratio of inorganic, spherical filler particles to organic, spherical particles is 20:1 to 0.5:1, preferably 15:1 to 1:1, more preferably 10:1 to 1:1 and still more preferably 5:1 to 2:1.

In further preferred coating compositions of the present invention, the weight ratio of inorganic, spherical filler particles to organic, spherical particles is at least 200:1 to 2:1, preferably 150:1 to 5:1, more preferably 100:1 to 7:1 and still more preferably 50:1 to 10:1.

Preferred coating compositions of the present invention comprise a total amount of 30-80 vol%, more preferably 40-70 vol% of inorganic, spherical filler particles and organic, spherical filler particles, based on the total volume of the composition. The spherical, filler particles therefore comprise a significant total volume amount of the composition and provide its key thermal insulation property.

Further preferred coating compositions of the present invention comprise a total amount of 5-40 wt%, more preferably 10-30 wt% of inorganic, spherical filler particles and organic, spherical filler particles, based on the total weight of the composition.

### Intumescent components

The coating compositions of the invention comprise intumescent components. These comprise an acid-generating agent, an expansion agent and optionally a carbon donor.

The acid-generating agent typically thermally decomposes at elevated temperatures (e.g. greater than 200 °C) and produces an acid that reacts with a carbon donor compound to produce a carbonaceous char. The expansion agent also decomposes at elevated temperatures (e.g. greater than 200° C) and produces a gas that volumetrically expands the carbonaceous char and produces a carbonaceous foam. The coating compositions of the invention optionally comprise a carbon donor compound which functions as a charring agent. Alternatively, the binder system comprising at least an epoxy-based binder and a curing agent can also provide a source of carbon, which, in a fire, is converted into a char.

When coatings containing intumescent components are exposed to fire or heat, and, as a result, the temperature of the coating exceeds 200 °C, for example, the acid-generating agent decomposes to provide an acid. The carbon donor compound reacts with the acid to form a carbonaceous char. For example, an ammonium polyphosphate acid-generating agent decomposes at about 240 °C to form ammonia and phosphoric acid. The phosphoric acid can function as an acid for dehydration reactions of organic polyol compounds such as starch, cellulose, non-polymeric sugars (e.g., glucose, fructose, sucrose, and the like), pentaerythritol, dipentaerythritol, or tripentaerythritol, or combinations of any thereof, which function as carbon donor compounds. The phosphoric acid reacts with the hydroxyl groups to form heat-unstable phosphate esters, which decompose to release carbon dioxide and regenerate the phosphoric acid. The dehydrated carbon donor and/or the binder system forms the carbonaceous char, and the carbon dioxide expands the char into a foam.

The expansion agent likewise decomposes at elevated temperatures (e.g., greater than 200° C.) and produces additional gas that volumetrically expands the carbonaceous char and produces the carbonaceous foam.

It is therefore preferred if the coating composition of the invention comprises an acid-generating agent, an expansion agent and optionally a carbon donor compound.

### Acid-generating agent

The acid-generating compound preferably comprises a source of phosphoric or sulfonic acid. In other words, the acid-generating compound is preferably capable of producing phosphoric or sulfonic acid upon exposure to heat, particularly at temperatures greater than 200° C.

Examples of acid-generating compounds include sodium phosphate, potassium phosphate (e.g. potassium tripolyphosphate), ammonium phosphate (e.g. ammonium polyphosphate (APP), monoammonium phosphate, diammonium phosphate), sodium sulfate, potassium sulfate, ammonium sulfate, magnesium sulfate, or para-toluene sulfonic acid, or a combination of any thereof.

In some examples, the acid-generating compound comprises a phosphoric acid ester of a polyhydroxy compound, or an ammonium phosphate (e.g., APP), or an amine phosphate (e.g., melamine phosphate), or a combination of any thereof.

A particularly useful acid-generating compound is ammonium polyphosphate because APP yields phosphoric acid at temperatures generally below the decomposition temperatures of the carbon donor compounds described above. Thus, APP produces phosphoric acid that is readily available to participate in the charring reactions.

APP compounds are polymeric phosphates, having P-O-P linkages, which may be represented by the formula:

[NH₄PO₃]ₙ

wherein the average value of n is at least about 10. Particularly useful APP compounds in the coating compositions of the present invention include those having values of n>1000.

The acid-generating compound can also comprise boric acid or a source of boric acid that is capable of producing boric acid upon exposure to heat, particularly at temperatures greater than 200° C. The acid-generating compound may be, for example, borate salts such as ammonium pentaborate, zinc borate, sodium borate, lithium borate, aluminum borate, magnesium borate, borosilicate compounds, and combinations of any thereof.

The coating composition of the present invention preferably comprises 10 to 50 wt% of an acid-generating agent, more preferably 12-40 wt%, and especially 15 to 30 wt% based on the total weight of the coating composition.

### Expansion agent

The coating composition of the present invention further comprises an expansion agent (also known as a blowing agent). The expansion agent produces non-flammable gases, generally nitrogen, when exposed to fire or heat. The produced gases will expand the char derived from the carbon source, forming a foam-like protective layer.

Suitable examples of commercially available expansion agents include but are not limited to nitrogen-containing compounds such as glycine, melamine, melamine salts, melamine derivatives, urea, urea derivatives, dicyandiamide, guanidine, and isocyanurate derivatives, especially melamine.

Melamine derivatives include for example melamine formaldehyde, methylolated melamine, hexamethoxymethylmelamine, melamine monophosphate, di-melamine phosphate, melamine biphosphate, melamine polyphosphate, melamine pyrophosphate, melamine cyanurate, melamine borate, melam (N2-(4,6-diamino-1,3,5-triazin-2-yl)-1,3,5-triazine-2,4,6-triamine), melem (2,5,8-triamino-1,3,4,6,7,9,9b-heptaazaphenalene), and melon (poly[8-amino-1,3,4,6,7,9,9b-heptaazaphenalene-2,5-diyl)imino).

Urea derivatives include, for example, N-alkylureas such as methyl urea; N,N'-dialkylureas such as dimethylurea; and N,N,N'-trialkylureas such as timethylurea; guanylurea; guanylurea phosphate; formamide amino urea; guanylurea phosphate; 1,3-diamino urea; biurea; and the like.

Isocyanurate derivatives of interest include tris-(2-hydroxyethyl)isocyanurate (THEIC).

Boron-containing compounds useful as expansion agents in the present invention include, but are not limited to, boric acid, and borates, such as ammonium pentaborate, zinc borate, sodium borate, lithium borate, aluminum borate, magnesium borate, and borosilicate.

The expansion agent may also comprise monomeric or polymeric compounds such as meso-lactide, polylactide, a polysulfone, a polycarbonate, a polyester, a 1,1-di-activated vinyl compound, or an addition polymer of a 1,1-di-activated vinyl compound, or a combination of any thereof.

A physical expansion agent such as expandable graphite and/or gas incorporating expandable microspheres may also be used.

The coating composition preferably comprises 0.5 to 20 wt% of an expansion agent, more preferably 1.0 to 15 wt%, and still more preferably 5 to 15 wt%, based on the total weight of the coating composition.

### Carbon donor compound

The carbon donor compound, if present, preferably comprises an organic polyhydroxy compound (i.e. an organic polyol) and/or expandable graphite. For example, the carbon donor compound may be pentaerythritol, dipentaerythritol, tripentaerythritol, a polysaccharide (e.g., starch, cellulose, glycogen, and the like), a disaccharide sugar (e.g., sucrose, lactose, maltose, and the like), a monosaccharide sugar (glucose, fructose, galactose, and the like), glycerol, or expandable graphite, or a combination of any thereof.

Preferably the carbon donor is pentaerythritol or dipentaerythritol.

The coating composition preferably comprises 0.0 to 20 wt% of the carbon donor compound, more preferably 3 to 20 wt%, still more preferably preferably 5 to 15 wt%of the carbon donor compound based on the total weight of the coating composition.

### Reinforcing fibers and/or scrim/mesh

The coating composition optionally comprises reinforcing fibers and/or scrim or mesh.

The fibers useful in the coating composition of the present invention include, but are not limited to, inorganic fibers and organic fibers. Typical inorganic fibers include: carbide fibers, such as boron carbide fibers, silicon carbide fibers, niobium carbide fibers, etc.; nitride fibers, such as silicon nitride fibers; boron containing fibers, such as boron fibers, boride fibers; silicon containing fibers, such as silicon fibers, alumina-boron silica fibers, E-glass (non-base aluminum borates) fibers, C-glass (non-base or low base sodalime-aluminumborosilicate) fibers, A-glass (base -sodalime-silicate) fibers, S-glass fibers, inorganic glass fibers, quartz fibers, etc. The glass fibers may include E-glass fibers, C-glass fibers, A-glass fibers, S-glass fibers, etc.

Useful inorganic fibers also include ceramic fibers and basalt fibers. Kevlar (para-aramid fibres) may also be used.

A preferred organic fibre is carbon fibres.

When present, the reinforcing fibers are preferably present in an amount of 0.5 - 25 wt.%, and more preferably 1-15 wt.% based on the total weight of the coating composition.

It is also possible to incorporate a mesh or scrim with the intumescent coating composition. The mesh or scrim is combined with the coating composition at the point of application and becomes embedded in the resulting coating. The mesh or scrim is typically comprised of one, or a combination, of; glass, carbon, basalt, or some other high temperature resistant fibre based material. These can also comprise or be combined with a fine metal wire, for example carbon or stainless steel. This mesh is commonly used in the composition to provide an element of reinforcement or control of the intumescent foam as it forms during the intumescent reaction.

Preferably the coating composition and coating of the present invention does not contain a mesh or scrim.

### Additives

The coating composition of the invention optionally comprises a wide variety of additives. Examples of additives that are optionally present in the composition of the invention include fillers, colour pigments, rheology modifiers (anti-sagging/anti-settling agent), anti-corrosive agents, drying agents, dispersing agents, surface modifying agents, plasticizer, extenders and adhesion promoters. Any conventional additives may be present.

Additional additives are preferably present in an amount of 0 to 50 wt%, more preferably 0.1-30 wt%, still more preferably 0.1 to 20 wt% and particularly preferably 0.5 to 10 wt%, based on the total weight of the coating composition.

Further optional additives may be included to aid char formation and to strengthen the char and prevent char degradation. Such additives include solids such as zinc borate, zinc stannate, zinc hydroxystannate, glass flake, glass spheres, polymeric spheres, fibres (ceramic, mineral, glass/silica based), aluminium hydroxide oxide, boron phosphate, fumed silica.

Suitable fillers include titanium dioxide, zinc oxide, aluminium oxide, carbonates, borates, silica, silicates, heavy metal oxides such as cerium oxide, lanthanum oxide and zirconium oxide, mica, diatomaceous earth and bentonite clay. A preferred filler is titanium dioxide.

Examples of color pigments include titanium white, red iron oxide, yellow iron oxide, black iron oxide, carbon black and organic color pigments.

As the rheology modifier, a thixotropic agent, such as polyamide wax, diatomaceous earth, polyethylene wax, fumed silica or a bentonite-based thixotropic agent, may be employed. Examples of such anti-sagging/anti-settling agents include Crayvallac Ultra, Crayvallac LV, both from Arkema, Thixatrol ST and Thixatrol Max, both from Elementis, Disparlon 6650 from Kusumoto Chemicals Ltd and Celite from Imerys

It may also be possible to include anticorrosive components in the coating composition. Such components may be metal oxides, metal carbonates, talc, feldspar and so on to act as anti-corrosive materials. Specific anticorrosive functional pigments include zinc phosphate, zinc oxide, zinc dust, aluminium flakes, lead oxide. Auxiliary corrosion inhibitors, for example a molybdate, phosphate, tungstate or vanadate, ultrafine titanium dioxide, and/or zinc oxide and/or a filler such as silica, calcined clay, alumina silicate, talc, barytes or mica

### Compositions

Preferred coating compositions of the invention comprise:
(i) 5-60 wt%, preferably 5-40 wt% epoxy-based binder;
(ii) 5-30 wt%, preferably 10-25 wt% curing agent;
(iii) 1-40 wt%, preferably 5-35 wt% inorganic, spherical, filler particles;
(iv) 0.05-5 wt%, preferably 0.1-4 wt% organic, spherical, filler particles;
(v) 10-50 wt%, preferably 12-40 wt% an acid-generating agent; and
(vi) 0.5-20 wt%, preferably 1.0-15 wt% expansion agent.

Particularly preferred compositions of the invention comprise:
(i) 5-60 wt%, preferably 5-40 wt% epoxy-based binder;
(ii) 5-30 wt%, preferably 10-25 wt% curing agent;
(iii) 1-40 wt%, preferably 5-35 wt% inorganic, spherical, filler particles;
(iv) 0.05-5 wt%, preferably 0.1-4 wt% organic, spherical, filler particles;
(v) 10-50 wt%, preferably 12-40 wt% an acid-generating agent;
(vi) 0.5-20 wt%, preferably 1.0-15 wt% expansion agent; and
(vii) 3-20 wt%, preferably 5-15 wt% carbon donor.

Some preferred compositions of the invention do not comprise reinforcing fibers or scrim/mesh.

Preferred coating compositions of the invention have a solids content of least 98 wt%, more preferably at least 99 wt%. Particularly preferably the solids content of the coating compositions of the invention is 100 wt%.

Preferred coating compositions of the invention contain a very low solvent content such as less than 5.0 wt% solvent, especially less than 2.0 wt% solvent, more especially less than 1.0 wt% solvent, e.g. 0.5 wt% or less. Ideally the coating composition is substantially free (e.g. free) of solvent.

The high solids volume and low solvent content leads to lower VOC content. The VOC content of the coating composition is preferably less than 250 g/L, more preferably less than 100 g/L, most preferably less than 50 g/L, for example, the VOC content might be 25 g/L or less, such as 10 g/L or less. This means the coating composition is substantially free of VOCs.

The pot life of the coating composition of the invention is preferably at least 1hr, such as 1 to 3 hrs, e.g. 1.5 to 2.5 hrs. By pot life is meant the time after mixing of the first and second components when the coating composition is still able to be applied to the substrate. Pot lives of less than 30 mins are commercially challenging given the time it takes to coat a large object.

Preferred coating compositions of the invention are sprayable. Particularly preferably the coating composition of the invention is thixotropic. Thus the coating composition flows when shear is applied in a spray apparatus but does now flow once applied to a surface.

The coating composition of the invention adheres well to both the substrate or a primer layer on that substrate and offers good water resistance and rapid hardness. The coating composition also meets environmental cycling standards (e.g. ISO 12944-9 Annex B).

Preferred coating compositions of the present invention provide a coating that is curable at ambient temperature. Particularly preferred coating compositions provide a coating that is curable at temperatures of less than 100 °C, more preferably less than 50 °C, and still more preferably less than 40 °C, each at 50% RH. Preferably, the coating compositions provide a coating that has a relatively broad temperature range at which the coating is curable, e.g. a range spanning at least 80 °C, more preferably a range spanning at least 100 °C (e.g. 80-150 °C).

Preferred coating compositions of the present invention have a cold spill protection, e.g. as determined by the method described in the examples, of at least 16 minutes and passive fire protection, e.g. as determined by the method described in the examples, of at least 90 minutes. More preferred coating compositions of the present invention have a cold spill protection, e.g. as determined by the method described in the examples, of at least 18 minutes and passive fire protection, e.g. as determined by the method described in the examples, of at least 94 minutes.

### Containers and kits

The present invention also relates to a container containing a coating composition as hereinbefore described. Suitable containers include cardboard boxes lined with a plastic bag and plastic bags (so called "big bags").

Alternatively, the coating composition of the present invention may be provided in the form of a kit. The coating composition of the present invention is preferably formed from the combination of a first composition (A) and a second composition (B). To prevent premature curing, the coating composition of the invention is preferably supplied in two parts, a first composition (A) comprising the epoxy-based binder and a second composition (B) comprising the curing agent. The other components of the coating composition may be present in either component (A) or (B) as long as any component present in component (A) does not react with any other component within component (A) and any component present in component (B) does not react with any other component within component (B).

In a kit, the curing agent is preferably present in a separate container to the epoxy-based binder.

Kits therefore comprise:
(i) a first container containing an epoxy-based binder; and
(ii) a second container containing a curing agent,
wherein each of said inorganic, spherical, filler particles, said organic, spherical, filler particles, said acid-generating agent and said expansion agent are present in at least one of said containers.

In preferred kits of the invention, the inorganic, spherical, filler particles are present in one container (e.g. the first container) and the organic, spherical, filler particles are present in a separate container (e.g. the second container). Alternatively, the inorganic, spherical filler particles and organic, spherical, filler particles may be present in both the first and second containers.

Preferred kits comprise acid-generating agent in both the first and second containers.

Preferred kits comprise expansion agent in the second container.

Preferred kits further comprise an accelerator, particularly preferably in the second container.

Preferred kits further comprise a reactive diluent, particularly preferably in the first container.

Preferred kits further comprise a silane, particularly preferably in the first container.

Preferred kits further comprise a flame retardant, particularly preferably in the first container.

Preferred kits further comprise reinforcing fibers preferably in both the first and second container.

Preferred kits further comprise a carbon donor, particularly preferably in the first container.

Optionally kits may further comprise a scrim or mesh.

### Manufacture

The present invention also relates to a process for preparing a coating composition as hereinbefore described comprising mixing:
(i) an epoxy-based binder;
(ii) a curing agent;
(iii) inorganic, spherical, filler particles;
(iv) organic, spherical, filler particles;
(v) an acid-generating agent; and
(vi) an expansion agent.

In preferred methods of the invention, the binder and a proportion of each of the spherical, filler particles are premixed and separately the curing agent, the expansion agent and the remaining proportion of each of the spherical, filler particles are premixed. The two resulting mixtures are then combined and mixed. The acid-generating agent is preferably present in each premix, i.e. a portion is mixed with the binder and each of the spherical, filler particles and a portion is mixed with the curing agent, expansion agent and each of the spherical, filler particles.

When present, the reactive diluent is preferably premixed with the binder. When present, the silane is preferably premixed with the binder. When present, the accelerator is preferably premixed with the curing agent.

When present, the flame retardant, is preferably premixed with the binder.

When present, the reinforcing fibers is preferably premixed both with the binder and the curing agent.

When present, the carbon donor is preferably premixed with the binder.

Any conventional mixing equipment may be used. For example, the various constituents may be mixed together using a high speed disperser, a ball mill, a pearl mill, a three-roll mill, an inline mixer etc.

Conveniently the coating composition is supplied as a kit as herein before described. It will be appreciated that the relative amounts of each component within any part of the kit will be determined by the final wt% values in the coating composition and the relative mixing ratios.

### Application to surfaces, coatings and coating systems

The present invention also relates to a method for coating a surface, preferably a metal surface, wherein said method comprises:
(i) applying a composition as hereinbefore described; and
(ii) curing said composition to form a coating on the surface.

Optionally the surface is pre-treated prior to application of the coating composition of the invention. Optionally the surface is coated with a primer composition prior to application of the coating composition of the invention. Thus the coating composition of the present invention may be part of a coating system. In a preferred method and coating system, a primer is applied to the surface and then the coating composition is applied to the primer layer. Examples of suitable primers include poly(urethane)-based and epoxy-based primers.

The temperature of the surface to which the composition is applied is preferably in the range -10-180 °C, more preferably -5-150 °C, still more preferably 0-50 °C. An advantage of the coating compositions of the present invention is that they may be applied to both hot and cold surfaces. Thus the substrates to which the coating is applied may be ones which are potentially exposed to temperature extremes, e.g. cryogenic liquids and fire.

The coating composition of the invention may be applied to a substrate by any conventional coating method, e.g. spraying, rolling, dipping etc. Preferably the coating composition is applied by spraying, and more preferably by airless spraying. Spraying is preferred as it enables large surface areas to be coated in a uniform manner. Additionally spraying can be used to coat non-horizontal surfaces. Preferably the substrate is metal, in particular steel.

Preferably the coating composition of the invention is applied as a single layer. Optionally the layer can be applied in a single step or in multiple steps, with drying and curing in between in each step.

The present invention also relates to a coating comprising a coating composition as hereinbefore described. Optionally the coating is applied in a number of steps, wherein a first layer of the coating is applied, dried and cured, then a subsequent layer of coating is applied. Preferably the number of application steps is minimised. Preferably the layer of coating applied in a single step is 0.2-20 mm, more preferably 0.5-10 mm.

The coating composition of the present invention may be used to form a single layer coating or a multilayer coating (i.e. a coating system).

In the case of a multilayer coating the coating composition of the present invention is preferably used to form a second layer on the substrate, e.g. metal pipe, above a primer layer. Examples of suitable primer layers are coatings based on epoxy, modified epoxy (such as modified with polyvinyl butyral), polyurethane, acrylic, vinyl and chlorinated rubber. Preferably the primer layer is an epoxy-based primer or a zinc-rich epoxy-based primer. The dry film thickness of the primer layer is ideally in the range of 15 -500 microns.

Alternatively, the coating composition of the invention may be applied directly onto the substrate.

Preferably a top coat is applied. The topcoat may provide the desired colour to the substrate. A clear top coat may also be suitable. Examples of suitable top-coat layers are layers comprising poly(urethane)-based resins, polysiloxane, epoxy, alkyd, acrylic, vinyl, chlorinated rubber and mixtures thereof. Preferably the top coat is polyurethane based. The thickness of the topcoat is preferably 15 microns to 250 microns. Preferably the dry film thickness is preferably in the range 25 microns to 75 microns, as too high a thickness of topcoat may inhibit the intumescent reactions.

Alternatively, the coating composition is not overcoated and therefore forms the top layer on a substrate.

Optionally the coating composition is present as a single layer on a substrate or as a layer over a primer layer.

In preferred multi-layer coatings, the coating formed from the coating composition of the invention is the sole insulative and intumescent layer, i.e. no other insulative layer is present, and no other intumescent layer is present.

### Curing

Preferably the coating of the present invention is cured. Thus, once a substrate is coated with the coating composition of the invention, the coating is preferably cured. Preferably the coating of the present invention is curable at ambient temperatures. Preferably therefore the coating of the present invention does not require heat to cause curing. This means the coating of the present invention is curable over a broad temperature range, e.g. from relatively low temperatures to relatively high temperatures (e.g. on hot surfaces). Preferably the curing time (i.e. time to achieve surface dryness by the thumb-test) is 0.5-10 hr, more preferably 1-5 hr.

### Substrate and articles

The present invention also relates to a substrate coated with a coating composition as hereinbefore described or a coating as hereinbefore described. The coating composition of the invention may be applied to any substrate. Representative examples of substrates include metal substrate (steel, galvanized steel, aluminium, copper), glass, ceramic, and polymeric materials (e.g. plastics). A preferred substrate is a metal substrate. The coating of the present invention provide CSP (i.e. thermal insulation) and PFP (i.e. intumescent protection) on such substrates. The types of metal substrates that are preferably coated with coatings of the present invention are those which are in contact with liquefied gases such as liquefied natural gas (LNG) and hydrogen. Examples of metal substrates include storage tanks, line pipes, bends and fittings, valves, pumps, manifolds, coils and tracers. A particularly preferred substrate is a metal tank or metal pipe, e.g. metal tanks and pipes for storage and transportation of liquefied gas, e.g. LNG and H₂.

The substrate may be partially, or completely coated, with the coating composition or coating of the invention. Preferably, however, all of the substrate is coated with the coating composition or coating of the invention. In the case of a tank or pipe, preferably external walls are coated with the coating composition of the invention.

Preferably the coating has a total dry thickness of 1-100 mm, more preferably 1-75 mm and still more preferably 2-40 mm.

Preferably the coating is insulative and intumescent. Thus a preferred coating of the invention is on a metal surface, wherein said coating is insulative and intumescent and the coating comprises:
(i) an epoxy-based binder;
(ii) a curing agent;
(iii) inorganic, spherical, filler particles; and
(iv) organic, spherical, filler particles.

Preferred binder, curing agent, filler particles and other ingredients present in the coating are as hereinbefore described. Preferred intumescent components are as hereinbefore described.

Preferred coatings of the present invention have a cold spill protection, e.g. as determined by the method described in the examples, of at least 16 minutes and passive fire protection, e.g. as determined by the method described in the examples, of at least 90 minutes. More preferred coatings of the present invention have a cold spill protection, e.g. as determined by the method described in the examples, of at least 18 minutes and passive fire protection, e.g. as determined by the method described in the examples, of at least 94 minutes.

Preferred coatings of the present invention are curable at ambient temperature. Particularly preferred coatings are curable at temperatures of less than 100 °C, more preferably less than 50 °C, and still more preferably less than 40 °C, each at 50% RH. Preferably, the coatings have a relatively broad temperature range over which they are curable, e.g. a range spanning at least 80 °C, more preferably a range spanning at least 100 °C (e.g. 80-150 °C).

### Uses

The present invention also provides the use of a composition as hereinbefore described to form a coating, preferably an insulative and intumescent coating, on at least one surface of a substrate or article. Preferably the surface is a metal surface as hereinbefore described.

The invention will now be described with reference to the following non-limiting examples.

### EXAMPLES

### Materials

The compounds and polymers used in the examples were all available commercially. The compounds and polymers used are summarised in the table below wherein EEW is Epoxy Equivalent Weight and AHEW is Amine Hydrogen Equivalent Weight.

| **Materials** | **Details** | **Properties** |
|---|---|---|
| Bisphenol A epoxy- based binder | Binder, produced from Bisphenol A and epichlorohydrin | EEW = 182 - 192 g/eq |
| | | Viscosity = 11000 - 14000 mPa·s |
| Amine curing agent | Modified polyamine comprising one or more benzylamine structures, (Ancamine 2712M from Evonik) | AHEW = 95 g/eq |
| | | Viscosity = 350-650 cP |
| Accelerator | 2,4,6-tris(dimethylaminom ethyl)phenol (Ancamine K54 from Evonik) | Amine Value = 630 mg KOH/g |
| | | Viscosity = 120-250 mPa·s |
| Hollow inorganic spheres | 3M Glass bubbles S38 from 3M | Density: 0.38g/cc |
| | | Average diameter: 40 microns |
| Hollow organic spheres | Expancel 043 DET 80 d20 from Nouryon | Density: 0.02 |
| | | Average diameter: 80 microns |
| Ammonium Polyphosphate | Acid catalyst for intumescent reaction | |
| Melamine | Expansion agent for intumescent reaction | |
| Wetting/dispersing agent | Acrylate copolymer, Disperbyk-2070 | |
| Flame retardant | Triphenyl phosphate ester | Viscosity = 65-90 mPa·s |
| Thickener | Diatomaceous earth (Amorphous Silica) | |
| Defoamer | BYK-052 N | |

### Preparation of coating compositions

The components of the coating compositions were mixed in the proportions set out in the Tables below. The components of the compositions are given in the tables as wt%.

All liquid parts of Component A were mixed in a dissolver. The appropriate filler(s) was then added to a weighed amount of the pre-mixed liquid phase and sealed off in a container. This was then homogenized on a Collomix XM2 650 Forced action mixer. The same procedure was followed for Component B, before Component A and Component B were transferred to the same container and homogenised on a Collomix XM2 650 Forced action mixer.

### Preparation of samples for testing

- For simulated cryogenic spill protection testing:
   The test samples were prepared and tested in Jotun's internal test procedure, using 600x600x5mm steel plates (5 mm thick, carbon steel, Sa *2*½) that were coated by hand application with the mixed, liquid coatings. The coating(s) prepared using the present invention was applied to 12 mm DFT.
- For simulated fire protection testing:
   The test samples were prepared and tested in Jotun's internal test procedure, using 300x300x5mm plates (5 mm thick, carbon steel, Sa *2*½) that were coated by hand application with the mixed, liquid coatings. The coating(s) prepared using the present invention was applied to 12 mm DFT.

### Test Methods

### • Simulated cryogenic spill protection (CSP) testing:

The prepared samples were conditioned at 25 °C/50% RH for a minimum of 24 hours prior to CSP testing. The test was conducted using Jotun's internal test procedure based upon the principals outlined in ISO 20088-1.

Liquid nitrogen was poured and allowed to pool on the surface of the coated test specimen and topped up throughout the exposure period as to avoid any coverage discrepancies (i.e. maintain consistent depth of pooling throughout).

Steel substrate temperatures of the test samples was monitored by 5 'Copper plate' thermocouples affixed using thermal tape to the steel surface. The CSP test was conducted until the average steel substrate temperatures of the test samples had reached a set failure temperature. In this case the critical core temperature was set to - 30°C, and the time to reach this temperature was recorded in minutes.

### • Simulated fire protection testing

The prepared samples were conditioned at 25 °C/50% RH for a minimum of 24 hours prior to fire testing. The test was be conducted using the hydrocarbon heating curve as defined within the Department of Energy Test Specification - issue 1: Jan 1990 and using procedures from BS476: Part 20: 1987 and BS 476: Part 21: 1987.

Furnace temperature was measured and controlled using four bare wire type K chromel-alumel thermocouples located within the furnace and positioned close to each test specimen, as per internal testing procedures. Furnace pressure was continually monitored by a micro-meter and maintained at approximately 10Pa for the test duration.

Steel substrate temperatures of the test samples was monitored by 3 type K chromel-alumel thermocouples drilled into the centre of the steel, as per Yellow Book rev5 directions. The fire test was conducted until the average steel substrate temperatures of the test samples had reached a set failure temperature. In this case the critical core temperature was set to 538 °C, and the time to reach this temperature was recorded in minutes.

The results of testing are also set out in the tables below wherein CE means comparative example. The comparative example lacks organic spheres. The tests were also carried out on commercially available epoxy passive fire protection epoxy coatings as controls, with Generic hydrocarbon intumescent I as the standard/benchmark.

| | **Ex.1** | **Ex.2** | **Ex.3** | **CE 1** |
|---|---|---|---|---|
| **Component A** | | | | |
| Epoxy-based binder | 45.64 | 45.64 | 45.64 | 45.64 |
| Hollow qlass spheres | 21.16 | 20.29 | 21.44 | 21.60 |
| Hollow orqanic spheres | 0.43 | 1.30 | 0.14 | N/A |
| Ammonium polyphosphate | 16.50 | 16.50 | 16.50 | 16.50 |
| Flame retardant | 12.80 | 12.80 | 12.80 | 12.80 |
| Thickener | 1.26 | 1.26 | 1.26 | 1.26 |
| Defoamer | 0.02 | 0.02 | 0.02 | 0.02 |
| Fibers and pigments | 2.17 | 2.17 | 2.17 | 2.17 |
| **Total** | 100 | 100 | 100 | 100 |
| | | | | |

| **Component B** | | | | |
|---|---|---|---|---|
| Amine curing agent | 33.06 | 33.06 | 33.06 | 33.06 |
| Accelerator | 3.02 | 3.02 | 3.02 | 3.02 |
| Hollow inorganic spheres | 8.08 | 7.75 | 8.20 | 8.24 |
| Hollow organic spheres | 0.16 | 0.49 | 0.06 | N/A |
| Ammonium polyphosphate | 23.67 | 23.67 | 23.67 | 23.67 |
| Blowing agent | 20.11 | 20.11 | 20.11 | 20.11 |
| Thickener | 3.62 | 3.62 | 3.62 | 3.62 |
| Defoamer | 0.04 | 0.04 | 0.04 | 0.04 |
| Wetting/dispersing agent | 0.14 | 0.14 | 0.14 | 0.14 |
| Fibers and pigments | 8.11 | 8.11 | 8.11 | 8.11 |
| **Total** | 100 | 100 | 100 | 100 |
| | | | | |

| **Composition** | | | | |
|---|---|---|---|---|
| Epoxy-based binder | 22.82 | 22.82 | 22.82 | 22.82 |
| Amine curing agent | 16.53 | 16.53 | 16.53 | 16.53 |
| Accelerator | 1.51 | 1.51 | 1.51 | 1.51 |
| Hollow glass spheres | 14.62 | 14.02 | 14.82 | 14.92 |
| Hollow orqanic spheres | 0.295 | 0.895 | 0.1 | 0 |
| Ammonium polyphosphate | 20.085 | 20.085 | 20.085 | 20.085 |
| Flame retardant | 6.4 | 6.4 | 6.4 | 6.4 |
| Blowing agent | 10.055 | 10.055 | 10.055 | 10.055 |
| Thickener | 2.44 | 2.44 | 2.44 | 2.44 |
| Wetting/dispersing agent | 0.07 | 0.07 | 0.07 | 0.07 |
| Defoamer | 0.03 | 0.03 | 0.03 | 0.03 |
| Fibers and pigments | 5.14 | 5.14 | 5.14 | 5.14 |
| | | | | |
| **Total** | 100 | 100 | 100 | 100 |
| Solids content (wt%) | 100 | 100 | 100 | 100 |
| Mixing ratio component A and B | 1:1 | 1:1 | 1:1 | 1:1 |
| Wt% of spheres, based on total weight of the coating composition | 15 | 15 | 15 | 15 |
| Weight ratio glass to organic spheres | 49 : 1 | 15.7 : 1 | 149 : 1 | N/A |
| Volume ratio of glass to organic spheres | 3.22 : 1 | 1.03 : 1 | 9.80 : 1 | N/A |

| | **Simulated Cryogenic Spill Protection Test** | | **Simulated Fire Protection Test** | |
|---|---|---|---|---|
| **Test** | **Time to failure to - 30°C/minutes** | | **Time to failure of 538°C/minutes** | |
| Ex. 1 | 20 | | 99 | |
| Ex. 2 | 20 | | 94 | |
| Ex. 3 | 18 | | 99 | |
| CE1 | 14 | | 96 | |
| Generic epoxy-based hydrocarbon intumescent I (CONTROL) | 11 | | 124 | |
| Generic epoxy-based hydrocarbon intumescent II | N/A | | 106 | |

The coatings of the invention (examples 1-3) have a significantly higher level of cryogenic spill protection than comparative example 1 (20 mins to failure at -30 °C *c.f.* 14 mins to failure). The fire protection level of the coatings of the invention (examples 1-3) is comparable to that of comparative example 1 (94-99 mins to failure at 538 °C *c.f.* 96 °C).

The coatings of the invention (examples 1-3) show a desirable balance of properties. This can be seen by comparing the coatings of the invention to a commercially available intumescent coating. The coatings of the invention exhibit a significant improvement in performance in the simulated cryogenic spill protection test compared to the commercially available passive fire protection coating as well as a reasonable degree of fire protection. Specifically, whilst the coatings of the invention have significantly improved performance in the cryogenic spill protection test (64-82% c.f. the commercially available coating) their performance in the fire protection test is within 20-25% of the performance of the intumescent coating, specifically designed for fire protection. This demonstrates that the single coating of the present invention achieves a highly beneficial combination of cryogenic spill protection and fire protection, which would conventionally need to be provided by a multi-layered coating system.

## Claims

1. A coating composition comprising:
(i) an epoxy-based binder;
(ii) a curing agent;
(iii) inorganic, spherical, filler particles;
(iv) organic, spherical, filler particles;
(v) an acid-generating agent; and
(vi) an expansion agent.

2. A composition as claimed in claim 1, wherein said inorganic, spherical, filler particles are hollow.

3. A composition as claimed in claim 1 or 2, wherein said inorganic, spherical filler particles comprise, preferably consist of, glass.

4. A composition as claimed in any preceding claim, wherein said inorganic, spherical filler particles have an average diameter of 10-100 microns.

5. A composition as claimed in any preceding claim, wherein said organic, spherical, filler particles are hollow.

6. A composition as claimed in any preceding claim, wherein said organic, spherical, filler particles have an average unexpanded diameter of 10-120 microns.

7. A composition as claimed in any preceding claim, wherein the average diameter of the hollow, organic, spherical filler particles is greater than the average diameter of the hollow, inorganic, spherical filler particles.

8. A composition as claimed in any preceding claim, further comprising flame retardant.

9. A method for preparing a composition as claimed in any preceding claim comprising mixing:
(i) an epoxy-based binder;
(ii) a curing agent;
(iii) inorganic, spherical, filler particles;
(iv) organic, spherical, filler particles;
(v) an acid-generating agent; and
(vi) an expansion agent.

10. A kit for preparing a composition as claimed in any one of claims 1 to 8, comprising:
(i) a first container containing an epoxy-based binder; and
(ii) a second container containing a curing agent,
wherein each of said inorganic, spherical, filler particles, said organic, spherical, filler particles, said acid-generating agent and said expansion agent are present in at least one of said containers.

11. A method of providing a coating on a surface, preferably a metal surface, wherein said method comprises:
(i) applying a composition as claimed in any one of claims 1 to 8; and
(ii) curing said composition to form a coating on the surface.

12. A coating on a surface, preferably a metal surface, wherein said coating is formed from a composition as claimed in any one of claims 1 to 8.

13. Use of a composition as claimed in any one of claims 1 to 8 to form a coating, preferably an insulative and intumescent coating, on at least one surface (e.g. a metal surface) of a substrate or article.

14. A coating system comprising:
(i) optionally a primer layer;
(ii) an insulative and intumescent layer formed from a composition as claimed in any one of claims 1 to 8; and
(iii) optionally a top coat layer;
wherein at least one of said primer layer and said top coat layer is present.

15. An intumescent coating composition comprising:
(i) an epoxy-based binder;
(ii) a curing agent;
(iii) inorganic, spherical, filler particles; and
(iv) organic, spherical, filler particles.
